# EUROPÄISCHE PATENTSCHRIFT

(11) **EP 2 613 899 B1**
(45) Veröffentlichungstag und Bekanntmachung des Hinweises auf die Patenterteilung: **07.11.2018**
(21) Anmeldenummer: 11804938.6
(22) Anmeldetag: 08.09.2011
(51) Int. Cl.: B22F 3/105

(54) **VERFAHREN UND VORRICHTUNG ZUR GENERATIVEN HERSTELLUNG ZUMINDEST EINES BAUTEILBEREICHS**
METHOD AND DEVICE FOR GENERATIVELY PRODUCING AT LEAST ONE COMPONENT AREA
PROCÉDÉ ET DISPOSITIF DE PRODUCTION GÉNÉRATIVE D'AU MOINS UNE ZONE D'UN COMPOSANT

(30) Priorität: 04.11.2010 DE 102010050531; 08.09.2010 DE 102010044780
(43) Veröffentlichungstag der Anmeldung: 17.07.2013
(73) Patentinhaber: MTU Aero Engines AG, 80995 München (DE)
(72) Erfinder: JAKIMOV, Andreas, 81245 München (DE); HANRIEDER, Herbert, 85411 Hohenkammer (DE); MEINERS, Wilhelm, 52072 Aachen (DE)
(86) Internationale Anmeldenummer: PCT/DE2011/075215
(87) Internationale Veröffentlichungsnummer: WO 2012/048696

(56) Entgegenhaltungen:
- WO-A1-2011/018463
- DE-A1- 19 953 000
- DE-C1- 10 104 732
- US-A- 4 944 817
- US-A- 5 393 482
- US-A- 6 007 764
- BENDA J A: "Temperature-controlled selective laser sintering", PROCEEDINGS OF THE SOLID FREEFORM FABRICATION SYMPOSIUM,, 1. Januar 1994 (1994-01-01), Seiten 277-284, XP009157464,
- M. GEIGER, A. COREMANS, N. NEUBAUER, F. NIEBLING: "Advanced Rapid Prototyping by laser beam sintering of metal prototypes - design and development of an optimised laser beam delivery system", SPIE, 1996, Seiten 103-114, XP002671513, Gefunden im Internet: URL:http://scitation.aip.org/getpdf/servle t/GetPDFServlet?filetype=pd&id=PSISDG00278 7000001000103000001&idtype=cvips&doi=10.11 17/12.248585&prog=normal [gefunden am 2012-03-14]
- KRUTH ET AL: "Progress in Additive Manufacturing and Rapid Prototyping", CIRP ANNALS, ELSEVIER BV, NL, CH, FR, Bd. 47, Nr. 2, 1. Januar 1998 (1998-01-01) , Seiten 525-540, XP022146131, ISSN: 0007-8506, DOI: 10.1016/S0007-8506(07)63240-5
- L. Lü, J.Y.H. Fuh, Y.S. Wong: "Laser-Induced Materials and Processes For Rapid Prototyping", 2001, Kluwer Academic Publisher ISBN: 0-7923-7400-2

## Beschreibung

Die Erfindung betrifft ein Verfahren zur generativen Herstellung zumindest eines Bereichs eines Bauteils nach dem Oberbegriff des Patentanspruchs 1 und eine Vorrichtung zur Durchführung eines derartigen Verfahrens nach dem Oberbegriff des Patentanspruchs 7.

Ein Verfahren und eine Vorrichtung zur generativen Herstellung eines Bauteils sind z.B. in dem deutschen Patent DE 196 49 865 C1 offenbart. Das Bauteil wird aus einzelnen Pulverschichten aufgebaut, die jeweils mittels eines gemäß einer Querschnittsgeometrie eines Bauteilmodells geführten Laserstrahls an der vorhergehenden Pulverschicht fixiert werden. Bei nicht schmelzschweißgeeigneten Legierungen wie Mar M247 kann es jedoch aufgrund des hohen lokalen Temperaurgradienten zwischen dem Schmelzbad und angrenzenden Bauteilbereichen zur Heißrissbildung kommen.

In der DE 10 2007 059 865 A1 wird zum Beispiel zur Einstellung von Spannungsverläufen vorgeschlagen, die Pulverschicht mittels einer Wärmeeinbringung nach dem Aufschmelzen bzw. nach dem Verfestigen der Schmelze nachzubehandeln. Hierdurch können Werkstoffkennwerte wie Härte, Zähigkeit oder Festigkeit als auch das Werkstoffverhalten lokal gezielt beeinflusst werden,

In der Patentanmeldung der Anmelderin WO 2008/071165 A1 wird vorgeschlagen, eine Reduzierung der Heißrissbildung durch eine globale Erwärmung des Bauteils im Bereich der zu erzeugenden Pulverschicht zu erreichen. Dieser Effekt ist jedoch nur bei verhältnismäßig geringer Vorschubgeschwindigkeit zu erzielen.

Bekannt ist auch, dass das Bauteil im Pulverbett mittels Induktion vorgeheizt wird. Dabei ist es nachtteilig, dass bei komplexen Bauteilgeometrien, auch trotz Anpassung der Induktionsspulengeometrie, zu inhomogenen Temperaturverteilung führen kann. Dies hat negative Auswirkungen auf die Bauteilqualität.

Aus der DE 101 04732 C1 ist ein Verfahren und eine Vorrichtung zum selektiven Laserschmelzen von metallischen Werkstoffen bekannt, bei dem eine Substratplatte, auf dem das herzustellende Bauteil gelagert ist, geheizt wird, um hohe Spannungen, die während der Herstellung des Bauteils zu Rissbildungen führen können, zu vermeiden.

Die US Patente US 4 944 817 A und US 6 007 764 A sowie die Artikel von J.A. Benda, Temperature-controlled selective laser sintering, PROCEEDINGS OF THE SOLID FREEFORM FABRICATION SYMPOSIUM, 1. January 1994, Seiten 277 bis 284, XP009157464 und M. Geiger, A. Coremans, N. Neubauer, F. Niebling, Advanced rapid prototyping by laser beam sintering of metal prototypes - design and development of an optimized laser beam delivery system, SPIE, 1996, Seiten 103 bis 114, XP002671513 offenbaren Verfahren zum selektiven Lasersintern, wobei teilweise das zu sinternde Pulvers mittels eines zweiten Laserstrahls vorgewärmt wird.

Aufgabe der Erfindung ist es, ein Verfahren zur generativen Herstellung zumindest eines Bereichs eines Bauteils, das die vorgenannten Nachteile beseitigt und insbesondere bei hohem Vorschub eine Heißrissbildung verhindert bzw. zumindest stark reduziert, sowie eine Vorrichtung zur Durchführung eines derartigen Verfahrens zu schaffen.

Diese Aufgabe wird gelöst durch ein Verfahren mit den Schritten des Patentanspruchs 1 und durch eine Vorrichtung mit den Merkmalen des Patentanspruchs 7.

Bei einem erfindungsgemäßen Verfahren zur generativen Herstellung zumindest eines Bereichs eines Bauteils, der aus einzelnen Pulverschichten aufgebaut wird, wird mittels eines ersten Hochenergiestrahls die zu erzeugende Pulverschicht lokal auf eine Schmelztemperatur erwärmt und ein Schmelzbad gebildet. Erfindungsgemäß wird eine dem Schmelzbad nachgelagerte Zone mittels eines zweiten Hochenergiestrahls auf eine Nachwärmtemperatur nachgewärmt und das Bauteil mittels einer Heizeinrichtung global auf eine Basistemperatur eingestellt. Durch die erfindungsgemäße Lösung wird die Temperatur hinter dem Schmelzbad der Schmelztemperatur angeglichen, so dass im Bauteilbereich des Schmelzbades nur ein kleiner Temperaturgradient vorliegt und somit eine Heißrissbildung verhindert wird. Da die Schmelztemperatur jedoch sehr hoch ist, bei Mar M247 beträgt sie beispielsweise 1300°C bis 1400°C, wird zudem erfindungsgemäß das entstehende Bauteil auf eine Basistemperatur bzw. auf ein Basistemperaturniveau vorgewärmt. Hierdurch wird das auf dem Bauteil abgelegte Pulver auf eine Temperatur nahe der Schmelztemperatur vorgewärmt, wodurch die Erwärmung des Pulvers auf die Schmelztemperatur zeitlich verkürzt und somit die Vorschubgeschwindigkeit erhöht werden kann.

Bei einem Ausführungsbeispiel wird die Basistemperatur auf ein konstantes Temperaturniveau, bevorzugterweise in einem Bereich zwischen 300°C bis 400°C unterhalb der Schmelztemperatur eingestellt. Bei einer Schmelztemperatur zwischen 1300°C bis 1400° beträgt die Basistemperatur somit bevorzugterweise ca. 900°C bis 1100°C.

Zur gleichmäßigen Temperatureinstellung des Bauteils ist es vorteilhaft, wenn ein Energieeintrag von möglichst vielen Seiten in das Bauteil erfolgt und dieses somit vollumfänglich bzw. nahezu vollumfänglich erwärmt wird.

Bei einem bevorzugten Ausführungsbeispiel wird das Bauteil induktiv erwärmt, was eine besonders schnelle und gezielte Erwärmung ermöglicht.

Bei einem Ausführungsbeispiel wird die nachgelagerte Zone angrenzend an das Schmelzbad ausgebildet. Hierdurch werden Temperatursprünge zwischen dem Schmelzbad und der Nachwärmzone und somit eine unnötige Belastung der zu erzeugenden Pulverschicht vermieden.

Um zu verhindern, dass eine Umgebung der Heizeinrichtung erwärmt wird, kann diese über z.B. eine ihre Umgebung begrenzende Kühleinrichtung gekühlt werden.

Eine erfindungsgemäße Vorrichtung zur Durchführung eines Verfahrens nach einem der vorhergehenden Ansprüche hat eine erste Strahlungsquelle zum Aussenden eines relativ zum generativ herzustellenden Bereichs eines Bauteils verfahrbaren Hochenergiestrahl, beispielsweise einen Laserstrahl oder einen Elektronenstrahl, zur lokalen Erwärmung einer zu erzeugenden Pulverschicht auf eine Schmelztemperatur zur Erzeugung eines Schmelzbades. Erfindungsgemäß ist eine zweite Strahlungsquelle zum Aussenden eines relativ zum Bauteilbereich verfahrbaren zweiten Hochenergiestrahls, beispielsweise ein Laserstrahl, ein Elektronenstrahl oder einen IR-Strahl, zum Nachwämen einer dem Schmelzbad nachgelagerten Zone auf eine Nachwärmtemperatur und eine Heizeinrichtung zum Einstellen des Bauteils global auf eine Basistemperatur vorgesehen.

Die Heizeinrichtung ist als eine Induktionsspule ausgebildet, die eine Heizkammer zur Aufnahme des Bauteils begrenzt. Die Induktionsspule wird von einem Wechselstrom durchflossen, wodurch ein Magnetfeld entsteht, das in dem Bauteil Wirbelströme hervorruft, die in Joulesche Wärme umgesetzt wird.

Vorzugsweise ist eine Kühleinrichtung zum Kühlen einer die Heizeinrichtung umgebenden Umgebung vorgesehen.

Um eine größtmögliche Flexibilität bezüglich der Vorschubrichtung zu erhalten, können die Strahlungsquellen als die jeweils andere Strahlungsquelle betreibbar sein.

Sonstige vorteilhafte Ausführungsbeispiele der Erfindung sind Gegenstand weiterer Unteransprüche.

Im Folgenden werden bevorzugte Ausführungsbeispiele der Erfindung anhand stark vereinfachter schematischer Darstellungen näher erläutert. Es zeigen:
- Figur 1: eine Querschnittsansicht einer erfindungsgemäßen Vorrichtung,
- Figur 2: eine Draufsicht auf einen herzustellenden Bauteilbereich, und
- Figur 3: einen Querschnitt durch den Bauteilbereich aus Figur 2.

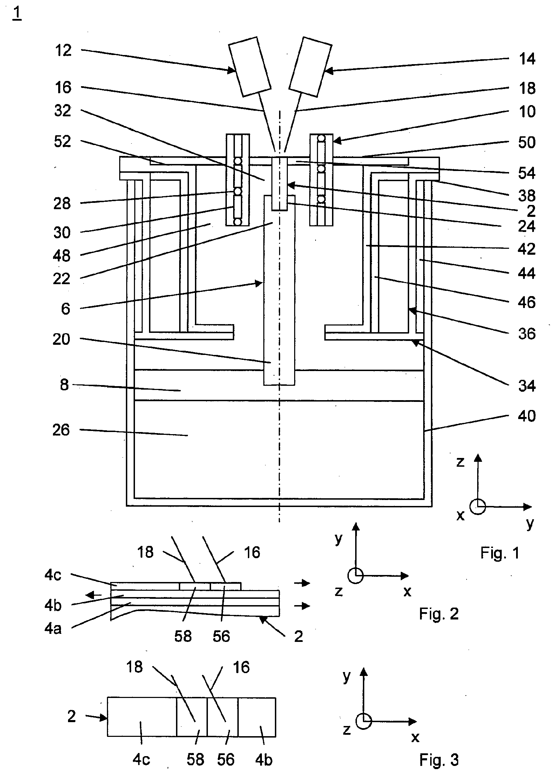

Gemäß der vereinfachten Darstellung in Figur 1 hat eine erfindungsgemäße Vorrichtung 1 zur generativen Herstellung, insbesondere zur Reparatur bzw. Neuaufbau eines Bereichs eines Bauteils 2, beispielsweise eine Laufschaufel eines Flugzeugtriebwerks, durch Bildung einer Vielzahl von übereinander angeordneten Pulverschichten 4a, 4b, 4c (siehe Figur 2) eine Halterung 6 zur Aufnahme des Bauteils 2, einen Hubtisch 8 zum Absenken des Bauteils 2 in vertikaler Richtung z, eine Heizeinrichtung 10 zum Einstellen des Bauteils 2 auf eine Basistemperatur T1 und zwei Strahlungsquellen 12, 14 zur Aussendung jeweils eines Hochenergiestrahls 16, 18 in Richtung des Bauteils 2 zum Fixieren und Verfestigen und zum lokalen Nachwärmen der jeweils zuletzt erzeugten Pulverschicht 4a, 4b, 4c.

Die Halterung 6 ist als eine Stütze ausgebildet, die sich mit einem Fußabschnitt 20 auf dem Hubtisch 8 abstützt und mit einem Kopfabschnitt 22 eine Aufnahme 24 zur Fixierung des Bauteils 2 während der Bearbeitung definiert.

Der Hubtisch 8 ist in vertikaler Richtung z verfahrbar in einem Bauraum 26 der Vorrichtung 1 gelagert und wird nach jedem Pulverschichtauftrag um eine Schichtdicke der nachfolgenden Pulverschicht 4a, 4b, 4c abgesenkt.

Die Heizeinrichtung 10 ist als eine flüssigkeitsgekühlte Induktionsspule ausgebildet. Sie weist eine bestrombare Spule 28 auf, zwischen deren Spulengängen ein Kühlmittelkanal 30 angeordnet ist. Sie definiert einen radial geschlossenen Heizraum 32, in dem das Bauteil 2 angeordnet ist und der eine derartige Höhe hat, dass das Bauteil 2 während des gesamten Bearbeitungsprozesses in dem Heizraum 32 positioniert ist. Mittels der Heizeinrichtung 10 wird das Bauteil 2 auf die Basistemperatur T1 erwärmt und konstant auf dieser Temperatur gehalten. Die Basistemperatur T1 bzw. das eingestellte Temperaturniveau ist materialabhängig und beträgt beispielsweise bei der Legierung Mar M247 etwa 900°C bis 1100°C. Bevozugterweise liegt die Basistemperatur T1 ca. 300°C bis 400°C unterhalb einer bevorzugten Schmelztemperatur T2 der jeweiligen Legierung bzw. des Pulvers.

Die Strahlungsquellen 12, 14 sind vorzugsweise Laserstrahlen 16, 18 aussendende Laser, insbesondere Festkörperlaser wie Nd:YAG mit einer Wellenlänge von λ = 1064 nm, deren Strahlführung ausführlicher in den Figuren 2 und 3 erläutert wird.

Des Weiteren hat die Vorrichtung 1 ein in den Bauraum 26 eingesetztes Gehäuse 34 und eine Kühleinrichtung 36. Das Gehäuse 34 ist oberhalb des Hubtisches 8 angeordnet und stützt sich am Rand 38 einer den Bauraum 26 begrenzenden Seitenwandung 40 der Vorrichtung 1 ab. Es ist zweigeteilt mit einer Innenwandung 42 und einer Außenwandung 44, die einen Ringraum 46 zur Aufnahme der Kühleinrichtung 36 begrenzen. Die Kühleinrichtung 36 dient insbesondere zur Vermeidung einer die Heizeinrichtung 10 umgebenden seitlichen Umgebung 48.

Ferner weist die Vorrichtung 1 eine äußere Abdeckung 50 zum stirnseitigen Verschließen des Bauraums 26 außerhalb der Heizeinrichtung 10 auf, die in einer Vertiefung 52 der Innenwandung 42 eingesetzt ist und sich radial zur Heizeinrichtung 10 erstreckt. Ebenso ist eine innere stirnseitige Abdeckung 54 vorgesehen, die den Heizraum 32 in axiale Richtung verschließt und eine Arbeitsebene zum Aufbau der Pulverschichten 4a, 4b, 4c definiert.

Zur Zuführung des Pulvers zur Bildung der Pulverschichten 4a, 4b, 4c im Bereich des Bauteils 2 in der Arbeitsebene weist die Vorrichtung 1 eine nicht gezeigte Zuführeinrichtung auf. Zudem hat die Vorrichtung 1 einen über die innere Abdeckung 50 geführten nicht gezeigten Schieber zur Bildung der Pulverschichten 4a, 4b, 4c sowie zur Einstellung deren Schichtdicken. Das Pulver ist bevorzugterweise aus einer Gruppe der hochtemperaturfesten und nicht schmelzschweißbaren Legierungen wie z.B. Mar M247 gewählt und weist eine bevorzugte Partikelgröße mit einem Durchmesser d<63 µm auf. Zudem kann es gasverdüst mit einem hohen Feinanteil sein.

Gemäß den Figuren 2 und 3, die einen erfindungsgemäßen Verfahrensschritt 3 zur Herstellung des Baueilbereichs zeigen, werden wie durch die Pfeile angedeutet die Pulverschichten 4a, 4b, 4c durch eine alternierende relative Linearbewegung bzw. Vorschubrichtung in x-Richtung zwischen den Laserstrahlen 16, 18 und dem Bauteil 2 hergestellt. Zur Realisierung dieser alternierenden bzw. richtungswechselnden Bewegung sind die Laser 12, 14 als der jeweils andere Laser 14 ,12 betreibbar. Die Laserstrahlen 14, 16 haben dabei jeweils bevorzugterweise eine derartige Fokussierung, dass ihr Durchmesser der Breite des zu fertigenden Bauteilbereichs entspricht.

Die Laserstrahlen 16, 18 sind jeweils auf eine lokale Zone 56, 58 des Bauteils 2 gerichtet, die in Vorschubrichtung hintereinander angeordnet sind. Die Zonen 56, 58 kann gleich groß sein und sind angrenzend zueinander angeordnet. In Vorschubrichtung betrachtet wird das Pulver in der vorderen bzw. ersten Zone 56 mittels des ersten Laserstrahls 16 auf die Schmelztemperatur T2 erwärmt. Die hintere bzw. zweite Zone 58 wird mittels des zweiten Laserstrahls 18 auf eine Nachwärmtemperatur T3 erwärmt. Die Schmelztemperatur T2 ist materialabhängig und/oder beträgt bei der hochwarmfesten Legierung wie Mar M247 etwa 1300°C bis 1400°C. Die Nachwärmtemperatur T3 ist ebenfalls materialabhängig und/oder ortsabhängig (zum Ausgleich einer inhomogenen Temperaturverteilung in komplexen Bauteilgeometrien), jedoch ist sie größer als die Basistemperatut T1, so dass die Beziehung gilt: T2>T3>T1. Zum Aufbau des Bauteilbereichs wird dieser über die Heizeinrichtung 10 in seinem Pulverbett auf die Basistemperatur T1 eingestellt. Die aufgebrachte Pulverschicht 4c wird beim Ablegen ebenfalls auf die Basistemperatur T1 erwärmt. Dann werden die Laser 12, 14 angesteuert und in Vorschubrichtung hintereinander über die Pulverschicht 4c geführt. Das Pulver in der vorderen Zone 56 wird über den vorderen Laserstrahl 16 auf die Schmelztemperatur T2 erwärmt, aufgeschmolzen und an der zuvor erzeugten Pulverschicht 4b fixiert. Das soeben fixierte Pulver durchläuft dann die Nachwärmzone 58, in der es über den hinteren Laserstrahl 18 auf die Nachwärmtemperatur T3 eingestellt wird, die kleiner als die Schmelztemperatur T2 aber größer als die Basistemperatur T1 ist. Nach dem Verlassen der Nachwärmzone kühlt das Pulver auf die Basistemperatur T1 ab, der der generellen Bauteiltemperatur während der Bearbeitung entspricht. Somit ist der Temperaturverlauf bzw. das Temperaturgefälle zwischen dem Schmelzbad 56 und dem nachfolgenden Bauteilzonen harmonisiert bzw. der Temperaturgradient ausgehend von dem Schmelzbad 56 über die Nachwärmzone 58 zum nachfolgenden Bauteilbereich ist ausgeglichen. Ferner bewirkt die Vorwärmung des Bauteils 2 auf die Basistemperatur T1 einen kleineren notwendigen Temperaturanstieg des dem Bauteil 2 zugeführten Pulvers zur Erwärmung auf die Schmelztemperatur T2.

Offenbart ist ein Verfahren zur generativen Herstellung bzw. zur Reparatur zumindest eines Bereichs eines Bauteils, bei dem eine einem Schmelzbad nachgelagerte Zone auf eine Nachwärmtemperatur nachgewärmt und das Bauteil auf eine Basistemperatur eingestellt wird, sowie eine Vorrichtung zur Durchführung eines derartigen Verfahrens.

### Bezugszeichenliste

- 1: Vorrichtung
- 2: Bauteil
- 4a, b, c: Pulverschicht
- 6: Halterung
- 8: Hubtisch
- 10: Heizeinrichtung
- 12: Strahlungsquelle
- 14: Strahlungsquelle
- 16: Hochenergiestrahl
- 18: Hochenergiestrahl
- 20: Fußabschnitt
- 22: Kopfabschnitt
- 24: Aufnahme
- 26: Bauraum
- 28a, b, c: Spulengang
- 30: Kühlmittelkanal
- 32: Heizraum
- 34: Gehäuse
- 36: Kühleinrichtung
- 38: Rand
- 40: Seitenwandung
- 42: Innenwandung
- 44: Außenwandung
- 46: Innenraum
- 48: Umgebung
- 50: äußere Abdeckung
- 52: Vertiefung
- 54: innere Abdeckung
- 56: Schmelzbad
- 58: Nachwärmzone
- T1: Basistemperatur
- T2: Schmelztemperatur
- T3: Nachwärmtemperatur

## Patentansprüche

1. Verfahren zur generativen Herstellung zumindest eines Bereichs eines Bauteils (2), der aus einzelnen Pulverschichten (4a, 4b, 4c) aufgebaut wird, wobei mittels eines ersten Hochenergiestrahls (16) die zu erzeugende Pulveischicht (4a, 4b, 4c) lokal auf eine Schmelztemperatur (T2) erwärmt wird und ein Schmelzbad (56) entsteht, **dadurch gekennzeichnet, dass** eine dem Schmelzbad (56) nachgelagerte Zone (58) mittels eines zweiten Hochenergiestrahls (18) auf eine Nachwärmtemperatur (T3) nachgewärmt wird, und dass das Bauteil (2) mittels einer Heizeinrichtung (10) global auf eine Basistemperatur (T1) eingestellt wird.

2. Verfahren nach Anspruch 1, wobei die Basistemperatur (T1) auf einem konstanten Temperaturniveau, vorzugsweise in einem Bereich zwischen 300°C bis 400°C unterhalb der Schmelztemperatur (T2), gehalten wird.

3. Verfahren nach Anspruch 1 oder 2, wobei das Bauteil (2) nahezu gleichmäßig vollumfänglich erwärmt wird.

4. Verfahren nach Anspruch 3, wobei das Bauteil (2) induktiv erwärmt wird.

5. Verfahren nach einem der vorhergehenden Ansprüche, wobei die nachgelagerte Zone (58) an das Schmelzbad (56) angrenzt.

6. Verfahren nach einem der vorhergehenden Ansprüche, wobei eine die Heizeinrichtung (10) umgebende Umgebung (48) gekühlt wird.

7. Vorrichtung (1) zur Durchführung eines Verfahrens nach einem der vorhergehenden Ansprüche, mit einer ersten Strahlungsquelle (12) zum Aussenden eines relativ zu einem generativ herzustellenden Bereich eines Bauteils (2) verfahrbaren Hochenergiestrahl (16) zur lokalen Erwärmung einer zu erzeugenden Pulverschicht (4a, 4b, 4c) auf eine Schmelztemperatur (T2) zur Erzeugung eines Schmelzbades (56), **gekennzeichnet durch** eine zweite Strahlungsquelle (14) zum Aussenden eines relativ zum Bauteil (2) verfahrbaren zweiten Hochenergiestrahls (18) zum Nachwärmen einer dem Schmelzbad (56) nachgelagerten Zone (58) auf eine Nachwärmtemperatur (T3) und durch eine Heizeinrichtung (10) zum Einstellen des Bauteils (2) global auf eine Basistemperatur (T1, wobei die Heizeinrichtung (10) eine Induktionsspule ist, die eine Heizkammer (32) zur Aufnahme des Bauteils (2) begrenzt.

8. Vorrichtung nach Anspruch 7, wobei eine Kühleinrichtung (36) zum Kühlen einer die Heizeinrichtung (10) umgebenden Umgebung (48) vorgesehen ist.

9. Vorrichtung nach Anspruch 7 oder 8, wobei die Strahlungsquellen (12, 14) als die jeweils andere Strahlungsquelle (14, 12) betreibbar sind.

## Claims

1. Method for the generative manufacturing of at least one region of a component (2) which is constructed from individual powder layers (4a, 4b, 4c), the powder layer (4a, 4b, 4c) to be produced being heated locally to a melting temperature (T2) by means of a first high energy beam (16) and a molten bath (56) being formed, **characterized in that** a zone (58) downstream from the molten bath (56) is reheated to a reheating temperature (T3) by means of a second high energy beam (18), and **in that** the component (2) is globally adjusted to a base temperature (T1) by means of a heating device (10).

2. Method according to claim 1, wherein the base temperature (T1) is kept at a constant temperature level, preferably in a range of between 300°C and 400°C below the melting temperature (T2).

3. Method according to either claim 1 or claim 2, wherein the component (2) is heated almost evenly around the entire periphery thereof.

4. Method according to claim 3, wherein the component (2) is inductively heated.

5. Method according to any of the preceding claims, wherein the downstream zone (58) is adjacent to the molten bath (56).

6. Method according to any of the preceding claims, wherein a region (48) surrounding the heating device (10) is cooled.

7. Apparatus (1) for implementing a method according to any of the preceding claims, comprising a first radiation source (12) for emitting a high energy beam (16) that can be moved relative to a region, of a component (2), to be generatively manufactured, in order to locally heat a powder layer (4a, 4b, 4b) to be produced to a melting temperature (T2) in order to produce a molten bath (56), **characterized by** a second radiation source (14) for emitting a second high energy beam (18) that can be moved relative to the component (2) in order to reheat a zone (58) downstream from the molten bath (56) to a reheating temperature (T3) and by a heating device (10) for globally adjusting the component (2) to a base temperature (T1), the heating device (10) being an induction coil which delimits a heating chamber (32) for receiving the component (2).

8. Apparatus according to claim 7, wherein a cooling device (36) is provided for cooling a region (48) surrounding the heating device (10).

9. Apparatus according to either claim 7 or claim 8, wherein the radiation sources (12, 14) can be operated as the other radiation source (14, 12) in each case.

## Revendications

1. Procédé de production générative d'au moins une partie d'un composant (2) qui est constituée de différentes couches de poudre (4a, 4b, 4c), la couche de poudre (4a, 4b, 4c) à produire étant chauffée localement à une température de fusion (T2) au moyen d'un premier faisceau à haute énergie (16), et un bain de fusion (56) étant créé, **caractérisé en ce qu'**une zone (58) en aval du bain de fusion (56) est réchauffée à une température de réchauffage (T3) au moyen d'un deuxième faisceau à haute énergie (18), et **en ce que** le composant (2) est réglé globalement à une température de base (T1) au moyen d'un équipement de chauffage (10).

2. Procédé selon la revendication 1, la température de base (T1) étant maintenue à un niveau de température constant, de préférence dans une plage entre 300 °C à 400 °C au-dessous de la température de fusion (T2).

3. Procédé selon la revendication 1 ou 2, le composant (2) étant chauffé intégralement à peu près de façon uniforme.

4. Procédé selon la revendication 3, le composant (2) étant chauffé par induction.

5. Procédé selon l'une des revendications précédentes, la zone (58) en aval étant limitrophe du bain de fusion (56).

6. Procédé selon l'une des revendications précédentes, un environnement (48) entourant l'équipement de chauffage (10) étant refroidi.

7. Dispositif (1) destiné à la réalisation d'un procédé selon l'une des revendications précédentes, avec une première source de rayonnement (12) destinée à l'émission d'un faisceau à haute énergie (16), pouvant être déplacé relativement à une partie d'un composant (2) devant être produite de façon générative, pour le chauffage local à une température de fusion (T2) d'une couche de poudre (4a, 4b, 4c) à produire pour la production d'un bain de fusion (56), **caractérisé par** une deuxième source de rayonnement (14) destinée à l'émission d'un deuxième faisceau à haute énergie (18) pouvant être déplacé relativement au composant (2) pour le réchauffage d'une zone (58) en aval du bain de fusion (56) à une température de réchauffage (T3) et par un équipement de chauffage (10) pour le réglage du composant (2) globalement à une température de base (T1), l'équipement de chauffage (10) étant une bobine d'induction qui délimite une chambre de chauffage (32) pour la réception du composant (2).

8. Dispositif selon la revendication 7, un équipement de refroidissement (36) étant prévu pour le refroidissement d'un environnement (48) entourant l'équipement de chauffage (10).

9. Dispositif selon la revendication 7 ou 8, les sources de rayonnement (12, 14) pouvant être mises en oeuvre en tant qu'autre source de rayonnement (14, 12) respectivement.
